# EUROPÄISCHE PATENTSCHRIFT

(11) **EP 0 790 483 B1**
(45) Veröffentlichungstag und Bekanntmachung des Hinweises auf die Patenterteilung: **20.10.2004**
(21) Anmeldenummer: 97101578.9
(22) Anmeldetag: 01.02.1997
(51) Int. Cl.: G01C 9/00, B60R 21/00, G01C 9/12

(54) **Neigungssensor**
Tilt sensor
Capteur d'inclinaison

(30) Priorität: 19.02.1996 DE 19606043
(43) Veröffentlichungstag der Anmeldung: 20.08.1997
(73) Patentinhaber: Conti Temic Microelectronic GmbH, 90411 Nürnberg (DE)
(72) Erfinder: Walter, Joachim, Troy, Michigan 48098 (US)

(56) Entgegenhaltungen:
- DE-A- 3 604 216
- DE-A- 19 520 004
- DE-C- 4 211 507
- PATENT ABSTRACTS OF JAPAN vol. 013, no. 185 (P-865), 2. Mai 1989 (1989-05-02) & JP 01 013414 A (RICOH CO LTD), 18. Januar 1989 (1989-01-18)

## Beschreibung

Die Erfindung betrifft einen Neigungssensor nach dem Oberbegriff des Patentanspruchs 1.

Beschleunigungssensoren, insbesondere in der Funktion als Überrollsensoren, sollen in Cabrio-Fahrzeugen und in zunehmendem Masse auch in geländegängigen Fahrzeugen mit höherem Masseschwerpunkt einen Überschlag um die Fahrzeuglängsachse erkennen, um rechtzeitig Insassenschutzsysteme zu aktivieren.

Ein Neigungssensor nach dem Stand der Technik ist beispielsweise aus der Offenlegungsschrift DE 38 15 938 A1 bekannt. Der darin beschriebene sog. "Libellensensor" weist jedoch den Nachteil auf, dass er vergleichsweise viel Platz erfordert und deshalb nicht mit einer Aufprallsensorik in einem einzigen Gehäuse als erweitertes Insassenschutzsystem untergebracht werden kann.

Die DE 42 11 507 C1 offenbart eine Schaltungsanordnung zum Überwachen der Neigung eines Kraftfahrzeuges, die zur Diebstahlerkennung dient. Hierbei werden als Halbleiter ausgebildete Sensoren, die ihren Widerstand bei einer Durchbiegung verändern, in ein Kraftfahrzeug eingebaut. Bei einer Neigungsänderung verformt sich der Sensor unter dem Einfluß der nun unter anderem Winkel auf ihn einwirkenden Erdbeschleunigung. Diese Änderung wird messtechnisch erfasst. Daraus wird auf einen Diebstahl geschlossen und ein Alarm ausgelöst.

Die DE 195 20 004 A1 beschreibt einen Beschleunigungssensor, bei dem zwei Ausleger freitragend in einer Halterung angeordnet sind. Für den Nachweis von Schwingungen auf den Auslegern sind Piezowiderstände vorgesehen. In beiden schwingenden Enden der Ausleger ist ein Gewicht ausgebildet. Wird ein derartiger Sensor in eine Richtung senkrecht zur Sensorebene beschleunigt, so führt die Trägheit des Gewichts zu einer Auslenkung der Ausleger aus der Sensorebene. Diese Auslenkung bewirkt eine Verformung der Ausleger aus der Sensorebene heraus, die durch die an den Verbindungsstellen zwischen Ausleger und Halterung angebrachten Piezowiderstände erfasst wird, um so auf die einwirkende Beschleunigung schließen zu können. Beide Ausleger werden hierbei gleichsinnig und in gleichem Ausmaß verformt, so dass beide Piezowiderstände gleichermaßen - je nach Richtung der Beschleunigung - entweder gestaucht oder aber gestreckt werden. Nachteilig ist hierbei der relativ komplexe Aufbau des Beschleunigungssensors, der z.B. unterschiedliche Abmessungen der Enden der Ausleger und weitere Piezowiderstände für einen Ausgleich erfordert.

Es ist die Aufgabe der Erfindung, einen Neigungssensor anzugeben, der die vorgenannten Nachteile vermeidet.

Zur Lösung dieser Aufgabe wird ein Neigungssensor zur Detektion eines Kippwinkels angegeben, insbesondere als Überschlagsensor in einem Pkw zur Auslösung einer Insassenschutzvorrichtung, der aus einem Massekörper, einer zugehörigen Aufnahme und Dehnungsmesselementen zur Erzeugung eines kippwinkelabhängigen Messsignals besteht und die folgenden Merkmale aufweist:
- die Aufnahme weist eine v-förmige Gestalt auf,
- in die Innenseite jedes der beiden Schenkel der v-förmigen Aufnahme ist jeweils ein Biegebalken eingebracht,
- der Massekörper ist derart ausgebildet, dass er auf der Innenseite der v-förmigen Aufnahme flächenbündig auf den Biegebalken aufliegt und
- die Dehnungsmesselemente auf den Biegebalken derart angeordnet sind, dass sie die durch den Massekörper innerhalb der durch die v-förmige Aufnahme aufgespannten Ebene bewirkten Verformungen der Biegebalken messen.

Vorteilhafte Weiterbildungen der Erfindung sind den abhängigen Ansprüchen zu entnehmen.

Die Vorteile der Erfindung liegen darin, dass durch weniger und verkleinerte Bauteile Materialkosten eingespart werden können und der Neigungssensor zusammen mit einer Aufprallsensorik in einem Gehäuse angeordnet werden kann:

Ein Ausführungsbeispiel der Erfindung ist nachstehend ausführlich erläutert und anhand der Figuren dargestellt.

Es zeigen
- Fig. 1:: ein Schnittbild eines erfindungsgemässen Beschleunigungssensors,
- Fig. 2:: eine Skizze des Beschleunigungssensors bei waagerechter Ruhestellung,
- Fig. 3a:: eine Skizze des Beschleunigungssensors im ausgelenkten Zustand,
- Fig. 3b:: die zur Fig. 3a gehörenden Kräfte und Winkel,
- Fig. 4a:: eine Skizze des Beschleunigungssensors im ausgelenkten Zustand unter Einwirkung einer Beschleunigungskraft quer zur Fahrtrichtung und
- Fig. 4b:: die zur Fig. 4a gehörenden Kräfte und Winkel.

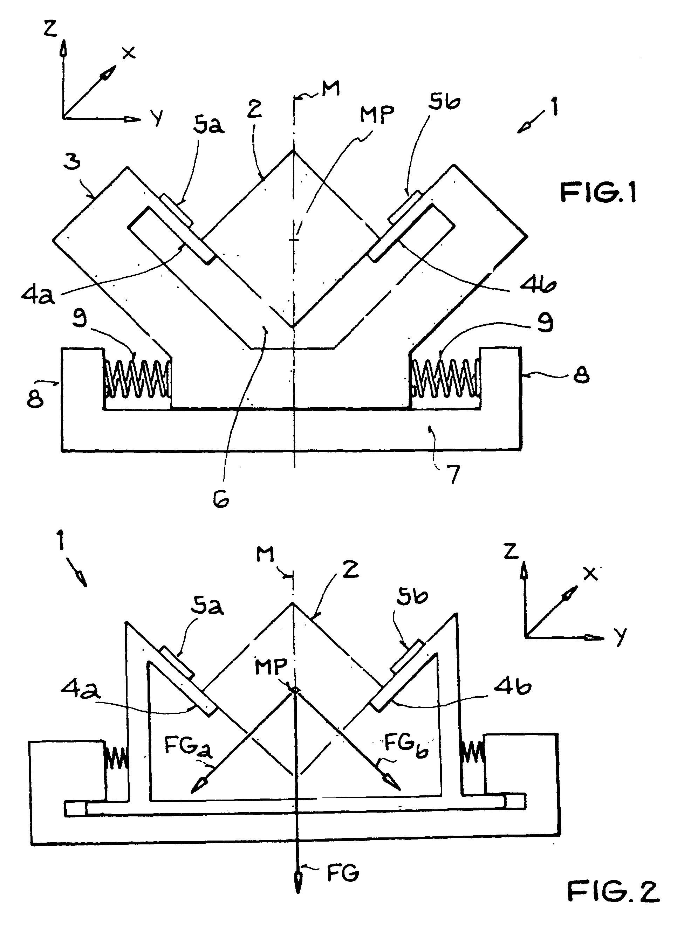

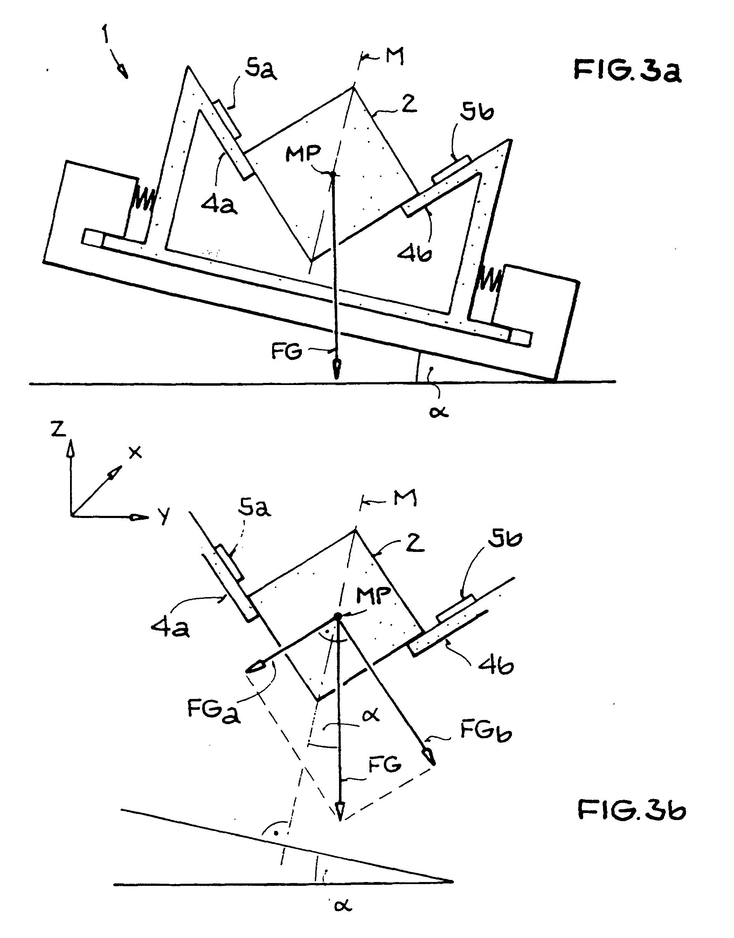

Die **Fig. 1** zeigt einen Neigungssensor **1** mit einer Mittelparallelen **M** zur Messung von Beschleunigungskräften in y- und z-Richtung, bei dem ein Massekörper **2** vorzugsweise in Würfelform mit einem Massemittelpunkt **MP** und mit möglichst hohem spezifischen Gewicht, beispielsweise Blei, auf einer der Würfelkanten stehend derart angeordnet ist, daß der Vektor der Gewichtskraft G bei waagerechter Anordnung des Beschleunigungssensors **1** vom Massenmittelpunkt **MP** durch diese Kante verläuft. Der Massekörper **2** ist in einer v-förmigen Aufnahme **3** gelagert und derart mit ihr verbunden, daß der Würfel **2** bei einer Erschütterung in der Aufnahme **3** festgehalten wird. Dies kann mittels einer punktuellen Klebestelle oder einer Halterung erreicht werden, die dort angeordnet ist, wo die seitlich verlaufenden Kanten des Würfels **2** die Aufnahme **3** berühren.

Die Aufnahme **3** weist an jeder Innenseite ihrer Schenkel jeweils einen mikromechanisch hergestellten, freitragenden Blegebalken **4a** bzw. **4b** auf, dessen freitragene Länge größer ist als die Kantenlänge des Massekörpers **2**. Jeder Biegebalken **4a** bzw. **4b** ist an einem Ende mit der vorzugsweise aus Silizium bestehenden Aufnahme **3** verbunden und weist in der Nähe dieser Stelle ein Dehnungsmeßelement **5a** bzw. **5b**, beispielsweise einen Dehnungsmeßstreifen oder ein piezoresistives Element, auf. Unter den Biegebalken **4a** bzw. **4b** ist ein freigeätzter Raum **6** angeordnet.

Bei einer Auslenkung des Beschleunigungssensors **1** aus der waagerechten Position im bzw. gegen den Uhrzeigersinn übt der Massekörper **2** aufgrund seiner Trägheit eine Druckkraft auf den linken bzw. rechten Biegebalken **4a** bzw. **4b** aus, worauf sich der betreffende Biegebalken **4a** bzw. **4b** elastisch verformt und in den freigeätzten Raum **6** ausweicht. Die mechanische Verformung des Biegebalkens **4a** bzw. **4b** wird auf das zugehörige Dehnungsmeßelement **5a** bzw. **5b** übertragen und in diesem eine elektrische Größe erzeugt, beispielsweise ein widerstand oder eine Spannung, die proportional zur ursächlichen Druckkraft ist. Diese elektrische Größe wird einer Auswerteeinheit zugeführt.

Die Aufnahme **3** steht verschiebbar auf einer vorzugsweise metallenen Bodenplatte **7**, die an zwei gegenüberliegenden Rändern jeweils eine nach oben gebogene Umrandung **8** aufweist. Zwischen diesen beiden Umrandungen **8** und der Aufnahme **3** ist jeweils ein Dämpfungselement **9** angeordnet, das kurz andauernde Querbeschleungungen aperiodisch dämpft. Vorzugsweise handelt es sich bei diesen Dämpfungselementen **9** um eine Feder oder um eine elastisch verformbare Masse wie Gummi oder ähnliches.

In **Fig. 2** ist der Neigungssensor **1** skizzenhaft in einer waagerechten Ruhestellung dargestellt, auf den lediglich die im Massemittelpunkt **MP** eingezeichnete Gewichtkraft FG des Würfels **2** wirkt. Eine Zerlegung des Vektors FG in zwei Komponenten FGa und FGb, wobei FGa senkrecht auf den Biegebalken **4a** und FGb senkrecht auf den Biegebalken **4b** einwirkt, ergibt für beide Biegebalken **4a** bzw. **4b** eine betragsmäßig gleich große Verformungskraft FGa bzw. FGb. Dadurch weisen auch beide Biegebalken **4a** und **4b** eine gleich große Verformung auf, und beide Dehnungsmeßelemente **5a** und **5b** geben eine gleich große elektrische Größe ab. Daran erkennt die nachgeschaltete Auswerteeinheit, daß auf den Neigungssensor **1** keine Beschleunigungskraft in y- oder z-Richtung einwirkt.

In **Fig. 3a** ist der Neigungssensor **1** skizzenhaft in einer um einen Kippwinkel α zur Mittelparallelen **M** ausgelenkten Stellung dargestellt, wobei **Fig. 3b** die zugehörigen Winkel und einwirkenden Kräfte zeigt. Zwar wirkt auch hier nur die im Massemittelpunkt **MP** eingezeichnete Gewichtskraft FG des Würfels **2** auf den Neigungssensor **1**, aber durch die Auslenkung um den Kippwinkel α werden die Biegebalken **4a** bzw. **4b** unterschiedlich stark belastet. zerlegt man den Vektor der Gewichtskraft FG wiederum in zwei Komponenten FGa und FGb, wobei FGa senkrecht auf den Biegebalken **4a** und FGb senkrecht auf den Biegebalken **4b** wirkt, so erkennt man die unterschiedlich große Belastung der Biegebalken **4a** bzw. **4b** an der unterschiedlichen Länge der Vektoren FGa bzw. FGb, die den Betrag der jeweils zugehörigen Kraft darstellen.

Aufgrund der auf den Biegebalken **4a** bzw. **4b** einwirkenden, unterschiedlich großen Kräfte FGa bzw. FCb geben die Dehnungsmeßelemente **5a** bzw. **5b** bei einer Auslenkung des Beschleunigungssensors **1** um den Kippwinkel α eine unterschiedlich große elektrische Größe an die nachgeschaltete Auswerteeinheit ab. Mit dem Betrag der Gewichtkraft FG, der der Auswerteeinheit vorgegeben ist, kann mittels bekannter und deshalb nicht weiter erläuterten geometrischen Beziehungen der Kippwinkel α ermittelt werden.

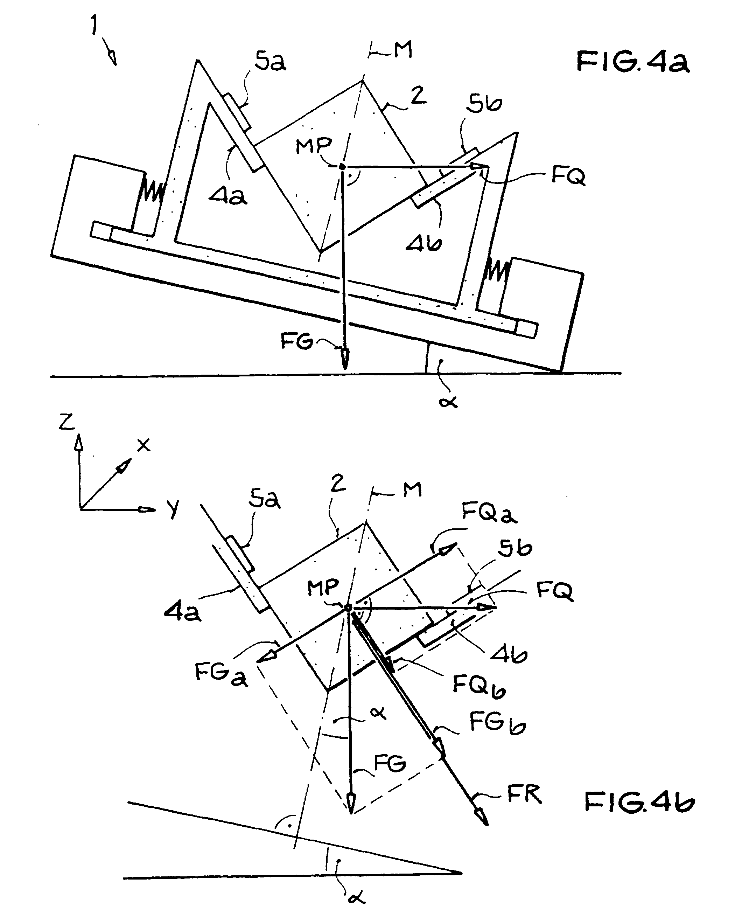

In **Fig. 4a** ist der Neigungssensor **1** skizzenhaft in einer um den Kippwinkel α ausgelenkten Stellung und unter dem Einfluß einer Querbeschleunigungkraft FQ in y-Richtung dargestellt, wobei **Fig. 4b** die zugehörigen Winkel und einwirkenden Kräfte zeigt. im Massemittelpunkt **MP** greifen die Gewichtskraft FG des Würfels **2** und die Querbeschleunigungkraft FQ an. Werden beide Kräfte, die Gewichtskraft FG bzw. die Querbeschleunigungkraft FQ, jeweils in eine Komponente FGa bzw. FQa senkrecht zum Biegebalken **4a** und in eine Komponente FGb bzw. FQb senkrecht zum Biegebalken **4b** zerlegt, so zeigt sich, daß der Biegebalken **4a** um den Betrag der Komponente FQa entlastet und der Biegebalken **4b** um den Betrag der Komponente FQb zusätzlich belastet wird. Die nachgeschaltete Auswerteeinheit erkennt daran, daß der Würfel **2** nicht nur um den Winkel α gekippt ist, sondern daß zusätzlich eine Querbeschleunigungskraft FQ auf ihn einwirkt.

Den Zusammenhang zwischen Kippwinkel α und der jeweils abgegebenen elektrischen Größe der Dehnungsmeßelemente **5a** bzw. **5b** stellt eine in der Auswerteeinheit abgelegte Wertetabelle her. Ein kritischer Kippwinkel ist dann erreicht, wenn beispielsweise ein Fahrzeug, in das der Neigungssensor **1** eingebaut ist, auf eine Seite zu kippen droht.

Modellversuche haben ergeben, daß für die Beurteilung dieser kritischen Situation, in der eine Insassenschutzvorrichtung, z.B. ein Überrollbügel, aktiviert werden muß, allein der Betrag einer resultierenden Kraft FR maßgeblich ist, die sich aus den beiden auf den jeweiligen Biegebalken **4a** bzw. **4b** einwirkenden Kräfte FGa und FQa bzw. FGb und FQb zusammensetzt und folglich senkrecht auf den jeweiligen Biegebalken **4a** bzw. **4b** einwirkt. Es ist unerheblich, wie groß jeweils die Anteile der Komponenten FGa und FQa bzw. FGb und FQb an der resultierenden Kraft FR sind. Die aufwendige Berechnung des tatsächlichen Kippwinkels α und der tatsächlich auftretenden Querbeschleunigungskraft FQ zur Berechnung des kritischen Kippwinkels braucht nicht vorgenommen zu werden. Kurzzeitig auftretende Querbeschleunigungen, die beispielsweise aus einer Kurvenfahrt herrühren, würden die Messung stören und werden deshalb mittels der Dämpfungselemente **9** (Fig. 1) aperiodisch gedämpft.

Der erfindungsgemäße Neigungssensor eignet sich insbesondere zum Einsatz in Pkws, bei denen im Fall eines drohenden Überschlags quer zur Fahrtrichtung eine Insassenschutzvorrichtung, z.B. ein Überrollbügel, aktiviert werden muß.

## Patentansprüche

1. Neigungssensor (1) zur Detektion eines Kippwinkels (α), insbesondere als Überschlagsensor in einem Pkw zur Auslösung einer Insassenschutzvorrichtung, bestehend aus einem Massekörper (2), einer zugehörigen Aufnahme (3) und *Dehnungsmesselementen (5a, 5b) zur Erzeugung eines kippwinkelabhängigen Messsignals,* **dadurch gekennzeichnet, dass**
a) die Aufnahme (3) eine v-förmige Gestalt aufweist,
b) in die Innenseite jedes der beiden Schenkel der v-förmigen Aufnahme (3) jeweils ein Biegebalken (4a, 4b) eingebracht ist,
c) der Massekörper (2) derart ausgebildet ist, dass er auf der Innenseite der v-förmigen Aufnahme (3) flächenbündig auf den Biegebalken (4a, 4b) aufliegt und
d) *die Dehnungsmesselemente (5a, 5b) auf den Biegebalken (4a, 4b) derart angeordnet sind, dass sie* die durch den Massekörper (2) innerhalb der durch die v-förmige Aufnahme (3) aufgespannten Ebene bewirkten Verformungen der Biegebalken (4a, 4b) messen.

2. Neigungssensor (**1**) nach Anspruch 1, **dadurch gekennzeichnet, daß** die beiden Schenkel der v-förmigen Aufnahme (**3**) in einem Winkel von 90° zueinander angeordnet sind.

3. Neigungssensor (**1**) nach Anspruch 2, **dadurch gekennzeichnet, daß** der Massekörper (**2**) eine Würfelform aufweist.

4. Neigungssensor (**1**) nach einem der vorangehenden Ansprüche, **dadurch gekennzeichnet, daß** der Massekörper (**2**) ein hohes spezifisches Gewicht aufweist.

5. Neigungssensor (**1**) nach einem der vorangehenden Ansprüche, **dadurch gekennzeichnet, daß** die Aufnahme (**3**) beweglich auf einer Bodenplatte (**7**) angeordnet ist.

6. Neigungssensor (**1**) nach Anspruch 5, **dadurch gekennzeichnet, daß** die Bodenplatte (**7**) auf zwei gegenüberliegenden Seiten eine Umrandung (**8**) aufweist.

7. Neigungssensor (**1**) nach Anspruch 6, **dadurch gekennzeichnet, daß** zwischen der Umrandung (**8**) und der Aufnahme (**3**) wenigstens ein Dämpfungselement (**9**) angeordnet ist.

8. Neigungssensor (**1**) nach einem der vorangehenden Ansprüche, **dadurch gekennzeichnet, daß** die Aufnahme (**3**) aus Silizium besteht.

9. Neigungssensor (**1**) nach einem der vorangehenden Ansprüche, **dadurch gekennzeichnet, daß** die Biegebalken (**4a, 4b**) der Aufnahme (**3**) mikromechanisch hergestellt sind.

## Claims

1. Inclination sensor (1) for detecting a tilt angle (á), in particular as a rollover sensor in a passenger vehicle for triggering a passenger protection device, consisting of a weight (2), an associated mount (3) and strain gauges (5a, 5b) for generating a tilt angle-dependent measurement signal, **characterised in that**
a) the mount (3) has a v-shaped form,
b) a respective flexural beam (4a, 4b) is introduced into the inside of each of the two legs of the v-shaped mount (3),
c) the weight (2) is formed such that it lies flush on the flexural beams(4a, 4b) on the inside of the v-shaped mount (3), and
d) the strain gauges (5a, 5b) are disposed on the flexural beams (4a, 4b) such that they measure the deformations of the flexural beams (4a, 4b) caused by the weight (2) within the plane which is spanned by the v-shaped mount (3).

2. Inclination sensor (1) according to Claim 1, **characterised in that** the two legs of the v-shaped mount (3) are disposed at an angle of 90° relative to one another.

3. Inclination sensor (1) according to Claim 2, **characterised in that** the weight (2) is cubic.

4. Inclination sensor (1) according to any one of the preceding Claims, **characterised in that** the weight (2) has a high relative density.

5. Inclination sensor (1) according to any one of the disposed in a movable manner on a base plate (7).

6. Inclination sensor (1) according to Claim 5, **characterised in that** the base plate (7) comprises an edging (8) on two opposite sides.

7. Inclination sensor (1) according to Claim 6, **characterised in that** at least one damping element (9) is disposed between the edging (8) and the mount (3).

8. Inclination sensor (1) according to any one of the preceding Claims, **characterised in that** the mount (3) consists of silicon.

9. Inclination sensor (1) according to any one of the preceding Claims, **characterised in that** the flexural beams(4a, 4b) of the mount (3) are produced by micromechanical means.

## Revendications

1. Capteur d'inclinaison (1) en vue de la détection d'un angle d'inclinaison (α), en particulier en tant que capteur de retournement dans une automobile en vue du déclenchement d'un dispositif de protection des occupants, se composant d'une masse (2), d'un logement associé (3), et d'éléments de mesure d'allongement (5a, 5b) en vue de la génération d'un signal de mesure dépendant de l'angle d'inclinaison, **caractérisé en ce que**,
a) le logement (3) présente une forme en V,
b) dans le côté interne de chacune des deux branches du logement en forme de V (3), est insérée respectivement une barre de flexion (4a, 4b),
c) la masse (2) est formée de sorte qu'elle s'appuie sur le côté interne du logement en forme de V (3) superficiellement sur les barres de flexion (4a, 4b) et
d) les éléments de mesure d'allongement (5a, 5b) sont disposés sur les barres de flexion (4a, 4b) de sorte qu'ils mesurent par l'intermédiaire de la masse (2) les déformations des barres de flexion (4a, 4b) agissant à l'intérieur de la zone s'étendant à travers le logement en forme de V (3).

2. Capteur d'inclinaison (1) selon la revendication 1, **caractérisé en ce que** les deux branches du logement en forme de V (3) sont disposées selon un angle de 90° l'une par rapport à l'autre.

3. Capteur d'inclinaison (1) selon la revendication 2, **caractérisé en ce que** la masse (2) présente une forme cubique.

4. Capteur d'inclinaison (1) selon l'une des revendications précédentes, **caractérisé en ce que** la masse (2) présente un poids spécifique élevé.

5. Capteur d'inclinaison (1) selon l'une des revendications précédentes, **caractérisé en ce que** le logement (3) est disposé déplaçable sur un support (7).

6. Capteur d'inclinaison (1) selon la revendication 5, **caractérisé en ce que** le support (7) présente un bord (8) sur deux côtés opposés.

7. Capteur d'inclinaison (1) selon la revendication 6, **caractérisé en ce que**, entre le bord (8) et le logement (3), est disposé au moins un élément d'amortissement (9).

8. Capteur d'inclinaison (1) selon l'une des revendications précédentes, **caractérisé en ce que** le logement (3) est composé de silicium.

9. Capteur d'inclinaison (1) selon l'une des revendications précédentes, **caractérisé en ce que** les barres de flexion (4a, 4b) du logement (3) sont fabriquées micromécaniquement.
